# EUROPÄISCHE PATENTANMELDUNG

(11) **EP 4 383 164 A1**
(43) Veröffentlichungstag der Anmeldung: **12.06.2024**
(21) Anmeldenummer: 22212238.4
(22) Anmeldetag: 08.12.2022
(51) Int. Cl.: G06Q 10/0832, G06Q 10/0833, G06Q 50/28

(54) **ORTUNGSSYSTEM**

(71) Anmelder: AS Strömungstechnik GmbH, 73760 Ostfildern (DE)
(72) Erfinder: Szeteli, Andreas, 70794 Filderstadt (DE); Fischer, Nico, 70794 Filderstadt (DE)
(74) Vertreter: Ruckh, Rainer Gerhard

(57) **Zusammenfassung**

Die Erfindung betrifft ein Ortungssystem (11) für Behälter (3). Die Behälter (3) weisenjeweils eine Behälteröffnung (5) zur Zufuhr oder Entnahme von Lagergut auf. An jedem Behälter (3) ist ein Funksignal (12) emittierender Funksender (10) vorhanden. Die Funksignale (12) werden von einem mobilen Endgerät (13, 13a, 13b) empfangen, wenn sich dieses innerhalb der Reichweite (R) des jeweiligen Funksenders (10) befindet. Das mobile Endgerät (13, 13a, 13b) verknüpft in diesem vorhandene Standortinformationen mit in den Funksignalen (12) enthaltenen Informationen zu Behälterinformationen und sendet diese an ein cloudbasiertes Rechnersystem (14). Dort wird abhängig von den empfangenen Behälterinformationen eine Ortung des Behälters (3) durchgeführt.

## Beschreibung

Die Erfindung betrifft ein Ortungssystem und ein Verfahren zur Ortung von Behältern.

Derartige Behälter dienen generell zur Lagerung von Lagergut, insbesondere von Flüssigkeiten. Generell weist der Behälter eine Behälteröffnung auf, über welche das Lagergut aus dem Behälter entnommen bzw. diesem zugeführt werden kann.

Insbesondere können die Behälter Bestandteil eines Entnahmesystems sein.

Ein derartiges Entnahmesystem ist aus der EP 0 977 702 B1 bekannt. Dieses Entnahmesystem dient zum Befüllen und Entleeren von Behältern, insbesondere von Fässern, die mit flüssigen Chemikalien befüllt sind. Die Behälter weisen jeweils ein Tauchrohr auf, über welches im Behälter gelagerte Flüssigkeiten entnommen werden können und über welchen Flüssigkeiten dem Behälter zugeführt werden können. Das Entnahmesystem weist einen Entnahmekopf auf, der am Tauchrohr des jeweiligen Behälters angeschlossen wird.

Über den Entnahmekopf erfolgt dann eine Entnahme von Flüssigkeit aus dem Behälter oder gegebenenfalls auch eine Zufuhr von Flüssigkeit. Hierzu wird über den Entnahmekopf eine Pumpe angeschlossen, um die Entnahme oder Zufuhr von Flüssigkeit vorzunehmen.

Ist die Entnahme oder Zufuhr von Flüssigkeit abgeschlossen, wird die Behälteröffnung des jeweiligen Behälters mit einem Verschlussmittel verschlossen.

Damit steht der Behälter für einen Transport bereit. Der Behälter kann dann beispielsweise zu einem Einsatzort, wo die Flüssigkeit zur Durchführung von Arbeitsvorgängen benötigt wird, oder zu einem Lagerort transportiert werden.

Eine wesentliche Aufgabe hierbei besteht in einer effektiven Objektverfolgung, d.h. Behälter sollen während ihres Transports fortlaufend lokalisiert werden können, um Transportvorgänge zu kontrollieren, Fehlleitungen von Behältern rechtzeitig erfassen und korrigieren zu können und auch um verlorengegangene Behälter wieder auffinden zu können.

Prinzipiell kann diese Objektverfolgung mittels GPS-Systemen erfolgen. Derartige GPS-Systeme sind jedoch unerwünscht aufwändig. In den Behältern müssen GPS-Tracker mit SIM-Karten eingebaut werden. Derartige SIM-Karten sind teuer. Zudem beanspruchen die GPS-Tracker einen unerwünscht großen Bauraum. Zudem ist der Strombedarf derartiger Einheiten unerwünscht hoch.

Der Erfindung liegt die Aufgabe zugrunde ein einfaches und effizientes Ortungssystem für Behälter eines Entnahmesystems bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Ortungssystem für Behälter. Die Behälter weisen jeweils eine Behälteröffnung zur Zufuhr oder Entnahme von Lagergut auf. An jedem Behälter ist ein Funksignal emittierender Funksender vorhanden. Die Funksignale werden von einem mobilen Endgerät empfangen, wenn sich dieses innerhalb der Reichweite des jeweiligen Funksenders befindet. Das mobile Endgerät verknüpft in diesem vorhandene Standortinformationen mit in den Funksignalen enthaltenen Informationen zu Behälterinformationen und sendet diese an ein cloudbasiertes Rechnersystem. Dort wird abhängig von den empfangenen Behälterinformationen eine Ortung des Behälters durchgeführt.

Die Erfindung betrifft weiterhin ein entsprechendes Verfahren.

Jeder Behälter weist erfindungsgemäß einen Funksignale emittierenden Funksender als einziges Mittel zur Ortung des Behälters auf. Der Funksender beansprucht nur einen geringen Bauraum und kann so platzsparend am Behälter eingebaut werden. Schließlich ist vorteilhaft, dass außer dem Funksender keine weiteren Elektronikkomponenten, insbesondere keine SIM-Karte, am Behälter vorgesehen werden.

Die Ortung des Behälters erfolgt derart, dass dann, wenn sich ein mobiles Endgerät, insbesondere ein Smartphone, innerhalb der Reichweite des Funksenders befindet, dessen Funksignale von dem mobilen Endgerät empfangen werden.

Die in den Funksignalen enthaltenen Informationen werden dann mit den Standortinformationen des mobilen Endgeräts, die standardmäßig im mobilen Endgerät vorhanden sind, zu Behälterinformationen verknüpft und über das Internet einer Cloud, d.h. einem cloudbasierten Rechnersystem zugeführt.

Anhand der Behälterinformation wird in dem cloudbasierten Rechnersystem eine Ortung durchgeführt, d.h. es wird eine Ortungsmeldung generiert, die den Standort des jeweiligen Behälters angibt. Zudem ist der Behälter anhand der Behälterinformation eindeutig identifizierbar. Damit können im cloudbasierten Rechnersystem für unterschiedliche Behälter Ortungsmeldungen generiert werden.

Die Ortungsmeldung für jeden Behälter erfolgt zeitabhängig, d.h. sie wird fortlaufend aktualisiert, so dass ein Benutzer den Transport des Behälters genau verfolgen kann.

Ein Benutzer kann zu beliebigen Zeiten mittels einer Anwendereinheit Ortungsmeldungen von Behältern abrufen und so deren Standort zeitabhängig verfolgen. Die Anwendereinheit ist generell von einer Rechnereinheit gebildet. Beispielsweise kann die Anwendereinheit von einem PC, einem Laptop, einem Smartphone oder dergleichen gebildet sein.

Vorteilhart ist in der Anwendereinheit eine App vorhanden, über welche der Zugang zum cloudbasierten Rechnersystem ermöglicht wird. Dabei kann durch Zugangscodes vorgegeben werden, ob der Benutzer Zugang zu allen im cloudbasierten Rechnersystem gespeicherten Behältern erhält oder nur einer Teilmenge hiervon.

Ein wesentlicher Aspekt der Erfindung besteht darin, dass im Behälter selbst keine Ortungs- d.h. Standortbestimmungsmittel vorgesehen sein müssen.

Vielmehr wird der Standort des mobilen Endgeräts, das sich innerhalb der Reichweite des Funksenders befindet, als Standort für den Behälter übernommen. Dieses zufällig innerhalb der Reichweite des Funksenders befindliche mobile Endgerät wird dann als Medium zur Weiterleitung der Behälterinformationen zum cloudbasierten Rechnersystem genutzt.

Vorteilhaft ist die Reichweite des Funksenders auf das lokale Umfeld des jeweiligen Behälters begrenzt.

Die räumlich eng begrenzte Reichweite des Funksenders ist eine wesentliche Voraussetzung dafür, dass die Standortinformation des innerhalb der Reichweite befindlichen mobilen Endgeräts auch ein hinreichend genaues Maß für den Standort des mobilen Endgeräts liefert.

Typischerweise liegt die Reichweite des Funksenders im Meterbereich.

Besonders vorteilhaft liegt die Reichweite des Funksenders im einstelligen Meterbereich.

Gemäß einer vorteilhaften Ausgestaltung ist in den Funksignalen eine Kennung des jeweiligen Behälters enthalten.

Die Kennung ist dabei in Form einer Codierung in den Funksignalen vorhanden und eindeutig dem Behälter zugeordnet, so dass durch Auswertung der Kennung in dem cloudbasierten Rechnersystem bekannt ist, zu welchem Behälter die Funksignale gesendet wurden.

Vorteilhaft ist mittels der Kennung der jeweilige Behälter identifizierbar.

Einen Behälter identifizierende Informationen, die in der Kennung enthalten sind, kann die Artikel-, Serien- oder Bestellnummer eines Behälters sein.

Weiterhin kann ist mittels der Kennung das im Behälter vorhandene Lagergut identifizierbar.

Vorteilhaft werden in den Behältern Lagergut in Form von Flüssigkeiten gelagert.

Derartige Flüssigkeiten können insbesondere von Chemikalien gebildet sein, die zur Durchführung von Arbeitsprozessen, insbesondere in der Halbleiterindustrie, benötigt werden.

Die Kennung kann dann die Spezifikation des im Behälter gelagerten Lagerguts, insbesondere Flüssigkeiten, enthalten.

Gemäß einer vorteilhaften Ausführungsform sind die Behälter Bestandteil eines Entnahmesystems.

Vorteilhaft weist das Entnahmesystem einen an die Behälteröffnung eines Behälters anschließbaren Entnahmekopf auf, wobei über den Entnahmekopf Lagergut aus dem Behälter entnehmbar oder diesem zuführbar ist.

Gemäß einer konstruktiv vorteilhaften Ausgestaltung ist in jedem Behälter ein an der Behälteröffnung ausmündendes Tauchrohr vorhanden, wobei der Funksender im Bereich der Ausmündung des Tauchrohrs angeordnet ist.

Diese Behälterkonstruktion ist für die Lagerung von Lagergut in Form von Flüssigkeiten angepasst. Ist der Entnahmekopf des Entnahmesystems an die Behälteröffnung und das Tauchrohr angeschlossen, kann mit dem Entnahmekopf Flüssigkeit über das Tauchrohr aus dem Behälter entnommen oder diesem zugeführt werden.

Besonders vorteilhaft ist das Tauchrohr an seiner Ausmündung an der Behälteröffnung mit einem Tauchrohrverschluss abschließbar. Der Funksender ist dann zweckmäßig im Tauchrohrverschluss angeordnet. Der Funksender ist dort unverlierbar angeordnet. Zudem ist vorteilhaft, dass der Funksender mit einem im Tauchrohrverschluss vorhandenen RFID-Chip verknüpft werden kann, in welchem Kennungen, die den Behälter und/oder den Inhalt des Behälters identifizieren, gespeichert sind.

Die Erfindung wird im Folgenden anhand der Zeichnungen erläutert. Es zeigen:
- Figur 1:: Schematische Darstellung eines Entnahmesystems mit einem zugeordneten Behälter.
- Figur 2:: Tauchrohr des Behälters gemäß Figur 1 mit einem zugeordneten Tauchrohrverschluss und einem Funksender.
- Figur 3:: Einzeldarstellung des Tauchrohrverschlusses mit dem Funksender
- Figur 4:: Blockschaltbild des erfindungsgemäßen Ortungssystems

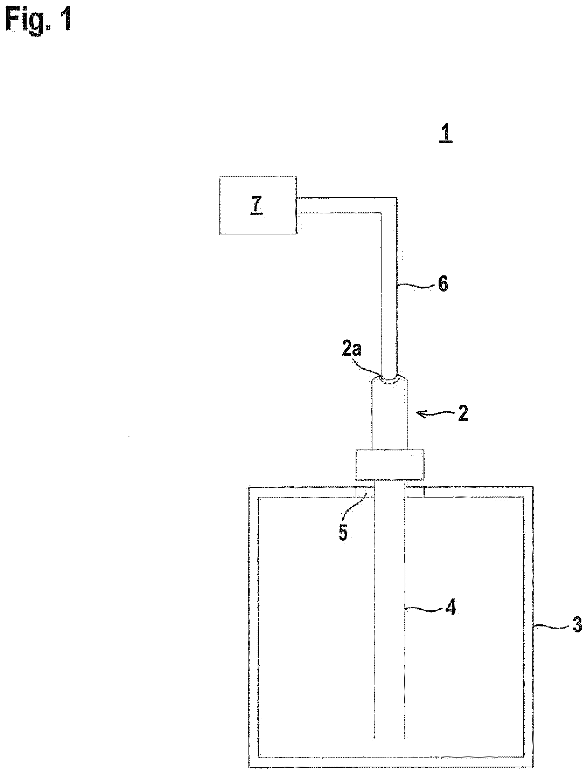

Figur 1 zeigt schematisch ein Entnahmesystem 1. Das Entnahmesystem 1 umfasst einen Entnahmekopf 2, der an einem Behälter 3, der insbesondere fassartig ausgebildet sein kann, angebracht werden kann. In dem Behälter 3 wird eine Flüssigkeit gelagert. Bei in derartigen Behältern 3 gelagerten Flüssigkeiten handelt, es sich insbesondere um flüssige Spezialchemikalien.

Der Behälter 3 weist ein Tauchrohr 4 auf. Das Tauchrohr 4 ist in einem Spundkopf, der in einer Behälteröffnung 5 des Behälters 3 sitzt, gelagert und so fest mit dem Behälter 3 verbunden. Die Längsachse des Tauchrohrs 4 verläuft in vertikaler Richtung.

Der Entnahmekopf 2 dient zur Entnahme von Flüssigkeiten aus dem Behälter 3. Ebenso kann dieser zur Befüllung von Behältern 3 genutzt werden. Hierzu weist der Entnahmekopf 2 an seinem oberen Ende einen Flüssigkeitsanschluss 2a auf. An diesem Flüssigkeitsanschluss 2a wird eine Leitung 6 angeschlossen, die zu einer Pumpe 7 führt. Die Leitung 6 kann in Form eines Schlauchs ausgebildet sein.

Die Pumpe 7 wird von einer nicht dargestellten Steuereinheit gesteuert.

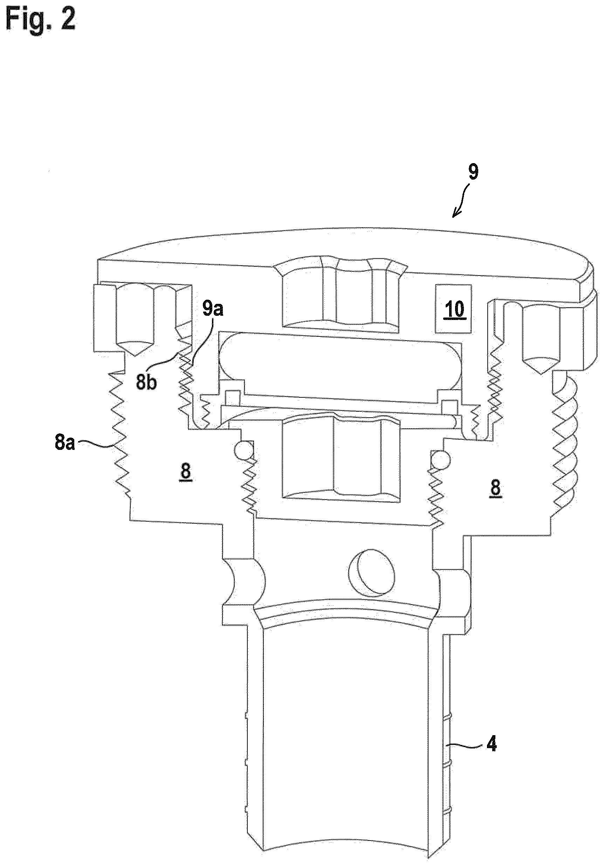

Figur 2 zeigt in einer vergrößerten Teildarstellung den oberen Bereich des Tauchrohrs 4, das an seinem oberen Ende ein Kopfteil 8 aufweist, das in der Behälteröffnung 5 gelagert ist. Im vorliegenden Fall wird das Kopfteil 8 in der Behälteröffnung 5 eingeschraubt. Hierzu weist das Kopfteil 8 ein Außengewinde 8a auf.

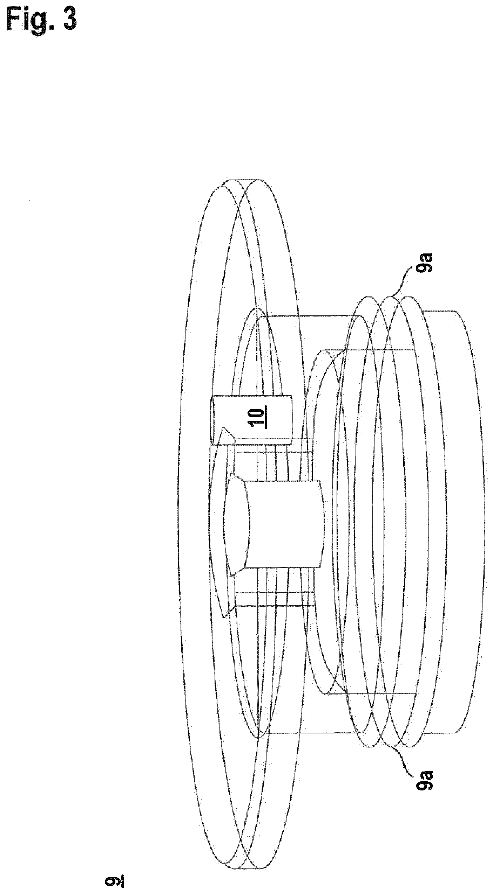

Die Öffnung am oberen Ende des Tauchrohrs 4 kann mit einem Tauchrohrverschluss 9 verschlossen werden. Im vorliegenden Fall wird der Tauchrohrverschluss 9 am Tauchrohr 4 festgeschraubt. Hierzu weist der Tauchrohrverschluss 9 ein Außengewinde 9a und das Kopfteil 8 ein korrespondierendes Innengewinde 8b auf. Figur 3 zeigt den Tauchrohrverschluss 9 in einer Einzeldarstellung.

Der mit dem Tauchrohrverschluss 9 verschlossene Behälter 3 bildet eine transportable Einheit. Um den Behälter 3 identifizieren zu können ist am Behälter 3, im vorliegenden Fall im Tauchrohrverschluss 9, ein Funksender 10 vorhanden (Figuren 2, 3).

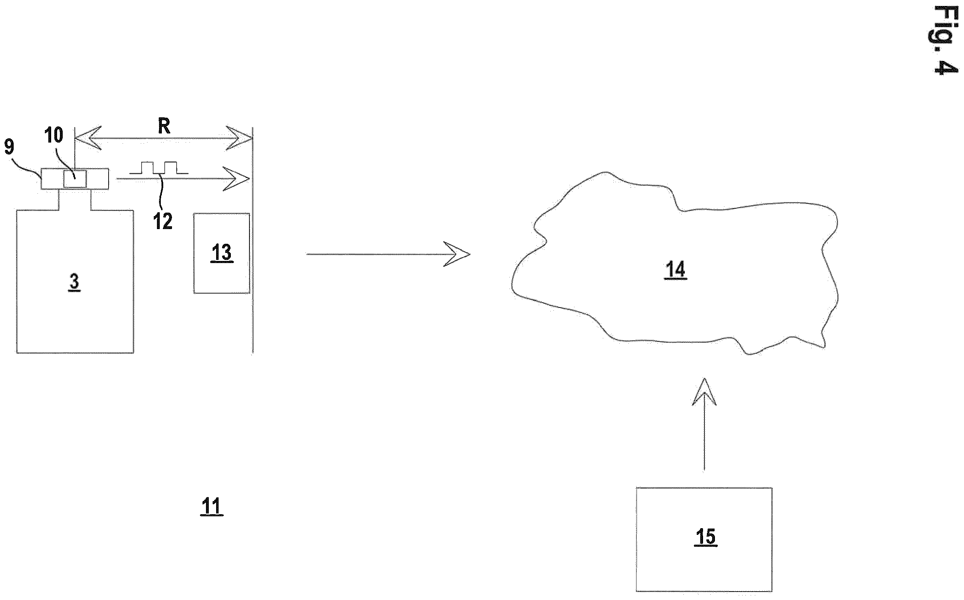

Der Funksender 10 ist Bestandteil eines Ortungssystems 11, wie in Figur 4 schematisch dargestellt.

Das Ortungssystem 11 dient zur Ortung und Verfolgung von Behältern 3 des Entnahmesystems 1, wobei jeder Behälter 3 einen Funksender 10 aufweist, vorteilhaft entsprechend den Ausführungsformen der Figuren 2 und 3.

Generell kann das Ortungssystem 11 auch zur Ortung von Behältern 3 dienen, die nicht Bestandteil eines Entnahmesystems 1 sind.

Der Funksender 10 sendet kodierte Funksignale 12 aus. Die Reichweite R des Funksenders 10, d.h. dessen Funksignal 12 ist lokal begrenzt auf das unmittelbare Umfeld des jeweiligen Behälters 3. Vorteilhaft liegt die Reichweite R im Meterbereich, insbesondere im einstelligen Meterbereich.

Befindet sich ein mobiles Endgerät 13, insbesondere Smartphone, im Bereich der Reichweite R des Funksenders 10 (wie in Figur 4 dargestellt) empfängt dieses mobile Endgerät 13 die Funksignale 12 des Funksenders 10. Dabei handelt es sich um ein beliebiges mobiles Endgerät 13 eines Benutzers, der sich ggf. zufällig im Reichweitenbereich des Funksenders 10 des jeweiligen Behälters 3 aufhält.

Das mobile Endgerät 13 verknüpft die in den Funksignalen 12 enthaltene Information mit der Standortinformation des mobilen Endgeräts 13 zur Behälterinformation.

Dabei ist in der Kodierung der Funksignale 12 eine Kennung vorhanden, die eine dem Behälter 3 kennzeichnende Information bildet.

Mittels der Kennung ist der jeweilige Behälter 3 identifizierbar.

Zusätzlich kann mittels der Kennung das im Behälter 3 vorhandene Lagergut identifizierbar sein.

Das mobile Endgerät 13 sendet die Behälterinformation über das Internet in eine Cloud, d.h. an ein cloudbasiertes Rechnersystem 14. Im cloudbasierten Rechnersystem 14 erfolgt eine Auswertung der Behälterinformation derart, dass für den mit der Behälterinformation identifizierte Behälter 3 eine Ortungsmeldung generiert wird. Die Ortungsmeldung wird fortlaufend dadurch aktualisiert, dass von jeweils einem mobilen Endgerät 13, das sich innerhalb der Reichweite des Funksenders des Behälters 3 befindet, Behälterinformationen an das cloudbasierte Rechnersystem 14 gesendet werden. Die Ortungsmeldung enthält dabei die so aktualisierte Behälterinformation, die in das cloudbasierte Rechnersystem 14 eingelesen wird.

Auf diese Weise können für verschiedene Behälter 3 im cloudbasierten Rechnersystem 14 Ortungsmeldungen generiert werden. Dabei ist jede Ortungsmeldung einer der jeweiligen Behälter 3 eindeutig kennzeichnenden Kennung zugeordnet.

Ein Benutzer kann mit einer Anwendereinheit 15 Ortungsmeldungen von Behältern 3 aus dem cloudbasierten Rechnersystem 14 abrufen und so die Standorte der Behälter 3 zeitabhängig verfolgen. Die Anwendereinheit 15 ist generell eine Rechnereinheit, die von einem PC, einem Laptop, einem Smartphone oder dergleichen gebildet sein kann.

Vorteilhaft ist in der Anwendereinheit 15 eine App vorhanden, über welche der Zugang zum cloudbasierten Rechnersystem 14 ermöglicht wird. Dabei kann durch Zugangscodes vorgegeben werden, ob der Benutzer Zugang zu allen im cloudbasierten Rechnersystem 14 gespeicherten Behältern 3 enthält oder nur zu einer Teilmenge hiervon.

### B ezugszei chenli ste

- (1): Entnahmesystem
- (2): Entnahmekopf
- (2a): Flüssigkeitsanschluss
- (3): Behälter
- (4): Tauchrohr
- (5): Behälteröffnung
- (6): Leitung
- (7): Pumpe
- (8): Kopfteil
- (8a): Außengewinde
- (8b): Innengewinde
- (9): Tauchrohrverschluss
- (9a): Außengewinde
- (10): Funksender
- (11): Ortungssystem
- (12): Funksignal
- (13): mobiles Endgerät
- (14): cloudbasiertes Rechnersystem
- (15): Anwendereinheit

- (R): Reichweite

## Patentansprüche

1. Ortungssystem (11) für Behälter (3), wobei die Behälter (3) jeweils eine Behälteröffnung (5) zur Zufuhr oder Entnahme von Lagergut aufweisen, **dadurch gekennzeichnet, dass** an jedem Behälter (3) ein Funksignale (12) emittierender Funksender (10) vorhanden ist, dass die Funksignale (12) von einem mobilen Endgerät (13, 13a, 13b) empfangen werden, wenn sich dieses innerhalb der Reichweite (R) des jeweiligen Funksenders (10) befindet, dass das mobile Endgerät (13, 13a, 13b) in diesem vorhandene Standortinformationen mit in den Funksignalen (12) enthaltenen Informationen zu Behälterinformationen verknüpft und diese an ein cloudbasiertes Rechnersystem (14) sendet, in welchem abhängig von den empfangenen Behälterinformationen eine Ortung des Behälters (3) durchgeführt wird.

2. Ortungssystem (11) nach Anspruch 1, **dadurch gekennzeichnet, dass** die Reichweite (R) des Funksenders (10) auf das lokale Umfeld des jeweiligen Behälters (3) begrenzt ist.

3. Ortungssystem nach einem der Ansprüche 1 oder 2, **dadurch gekennzeichnet, dass** die Reichweite (R) des Funksenders (10) im Meterbereich liegt.

4. Ortungssystem nach einem der Ansprüche 1 bis 3, **dadurch gekennzeichnet, dass** die Reichweite (R) des Funksenders (10) im einstelligen Meterbereich liegt.

5. Ortungssystem (11) nach einem der Ansprüche 1 bis 4, **dadurch gekennzeichnet, dass** das oder jedes mobile Endgerät (13, 13a, 13b) ein Smartphone ist.

6. Ortungssystem (11) nach einem der Ansprüche 1 bis 5, **dadurch gekennzeichnet, dass** wenigstens eine Anwendereinheit (15) vorgesehen ist, mittels der Ortungsinformationen über Behälter aus dem cloudbasierten Rechnersystem abrufbar sind.

7. Ortungssystem (11) nach einem der Ansprüche 1 bis 6, **dadurch gekennzeichnet, dass** in den Funksignalen (12) eine Kennung des jeweiligen Behälters (3) enthalten ist.

8. Ortungssystem (11) nach Anspruch 7, **dadurch gekennzeichnet, dass** mittels der Kennung der jeweilige Behälter (3) identifizierbar ist.

9. Ortungssystem (11) nach einem der Ansprüche 7 oder 8, **dadurch gekennzeichnet, dass** mittels der Kennung das im Behälter (3) vorhandene Lagergut identifizierbar ist.

10. Ortungssystem (11) nach einem der Ansprüche 1 bis 9, **dadurch gekennzeichnet, dass** in den Behältern (3) Lagergut in Form von Flüssigkeiten gelagert werden.

11. Ortungssystem (11) nach einem der Ansprüche 1 bis 10, **dadurch gekennzeichnet, dass** die Behälter Bestandteil eines Entnahmesystems sind.

12. Ortungssystem (11) nach einem der Ansprüche 1 bis 11, **dadurch gekennzeichnet, dass** in jedem Behälter (3) ein an der Behälteröffnung (5) ausmündendes Tauchrohr (4) vorhanden ist, wobei der Funksender (10) im Bereich der Ausmündung des Tauchrohrs (4) angeordnet ist.

13. Ortungssystem (11) nach Anspruch 12, **dadurch gekennzeichnet, dass** das Tauchrohr (4) an seiner Ausmündung an der Behälteröffnung (5) mit einem Tauchrohrverschluss (9) abschließbar ist, und dass der Funksender (10) im Tauchrohrverschluss (9) angeordnet ist.

14. Ortungssystem (11) nach einem der Ansprüche 1 bis 13, **dadurch gekennzeichnet, dass** das Entnahmesystem (1) einen an die Behälteröffnung (5) eines Behälters (3) anschließbaren Entnahmekopf (2) aufweist, wobei über den Entnahmekopf (2) Lagergut aus dem Behälter (3) entnehmbar oder diesem zuführbar ist.

15. Verfahren zur Ortung von Behältern (3), wobei die Behälter (3) jeweils eine Behälteröffnung (5) zur Zufuhr oder Entnahme von Lagergut aufweisen, **dadurch gekennzeichnet, dass** an jedem Behälter (3) ein Funksignale (12) emittierender Funksender (10) vorhanden ist, dass die Funksignale (12) von einem mobilen Endgerät (13, 13a, 13b) empfangen werden, wenn sich dieses innerhalb der Reichweite (R) des jeweiligen Funksenders (10) befindet, dass das mobile Endgerät (13, 13a, 13b) in diesem vorhandene Standortinformationen mit in den Funksignalen (12) enthaltenen Informationen zu Behälterinformationen verknüpft und diese an ein cloudbasiertes Rechnersystem (14) sendet, in welchem abhängig von den empfangenen Behälterinformationen eine Ortung des Behälters (3) durchgeführt wird.
